(19) Europäisches Patentamt
European Patent Office
Office européen des brevets

(11) **EP 1 456 997 B1**

(12) **EUROPEAN PATENT SPECIFICATION**

(45) Date of publication and mention
of the grant of the patent:
**05.03.2008 Bulletin 2008/10**

(51) Int Cl.:
**H04L 9/16** (2006.01)

(21) Application number: **01274922.2**

(22) Date of filing: **06.12.2001**

(86) International application number:
**PCT/SE2001/002695**

(87) International publication number:
**WO 2003/049363 (12.06.2003 Gazette 2003/24)**

(54) **SYSTEM AND METHOD FOR SYMMETRICAL CRYPTOGRAPHY**

SYSTEM UND VERFAHREN FÜR SYMMETRISCHE KRYPTOGRAPHIE

SYSTEME ET PROCEDE DE CRYPTOGRAPHIE SYMETRIQUE

(84) Designated Contracting States:
**AT BE CH CY DE DK ES FI FR GB GR IE IT LI LU MC NL PT SE TR**

(43) Date of publication of application:
**15.09.2004 Bulletin 2004/38**

(73) Proprietor: **TELEFONAKTIEBOLAGET LM ERICSSON (publ)**
**164 83 Stockholm (SE)**

(72) Inventor: **OLROG, Christian**
**S-181 36 Lidingö (SE)**

(74) Representative: **Sjöberg, Mats Hakan**
**Ericsson AB**
**Torshamnsgatan 23**
**164 80 Stockholm (SE)**

(56) References cited:
**WO-A2-01/48594        WO-A2-01/50676**
**US-A- 5 272 754        US-B1- 6 249 582**

**Description**

Field of the invention

The present invention relates to symmetrical cryptography and in particular telecommunication systems using symmetrical cryptography.

Background of the invention

Encryption of data sent over networks should typically prevent that identical plain-text blocks that are sent a plurality of times are being transformed into the same cipher-text block. This requirement should render it very complicated or impossible for the unauthorised cryptoanalyst to eavesdrop on encrypted cipher-texts relating to e.g. Internet browsing messages where the same web pages are requested over again by the same user.

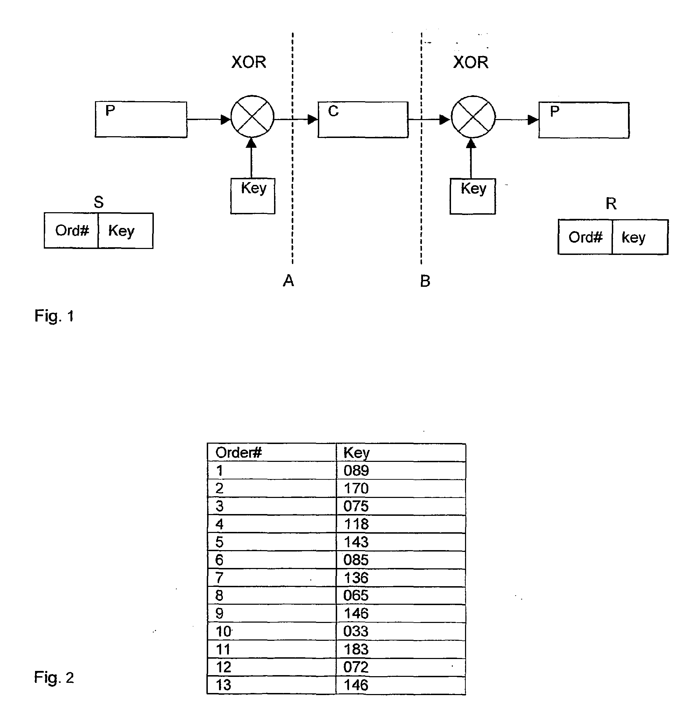

In fig. 1, a known single key cryptosystem is shown, in which a sender S is sending a plain-text message P to a receiver R. The plain-text message block P is processed according to a cipher, which in this case is the exclusive-OR function (XOR), with a key, consisting of a random bit sequence RS, such that a cipher-text block C is generated. The cipher-text block C is transmitted in point A over a medium M and is received in point B. For instance A corresponds to a radio transmitter, M corresponds to the air and B corresponds to a radio receiver. After reception in point B, the cipher-text message block C is processed in an exclusive-OR function with the same random sequence RS key, as used under encryption, such that the original plain-text block P is recovered.

For a sequence of plaintexts being transmitted, such as packets in a packet data network, it is noted that the receiver must know which order number of cipher-text message he receives in order to utilise the corresponding random bit sequence.

A table of random sequences known to both the receiver and sender can be used as keys for the symmetrical encryption and decryption. Such a table could have the format shown in fig. 2, or it could be much larger.

A Pseudo Random Number Generator (PRNG) can also be used to generate appropriate keys. A PRNG is a non-true random construction, which to the uninitiated appears to be a truly random number generator (TRNG). Normally a PRNG can achieve near TRNG output for a limited period, and quite often, the output will repeat itself in cycles. A longer cycle generally means a better PRNG.

Achieving true randomness for an inherently deterministic machine is a difficult problem. A solution purely based on software can only achieve "almost random" or "random-like" behaviour. In nature, omni present background radiation and hence atomic decay is considered one of the few true sources of randomness. In computer science, a carefully designed Josephson junction is regarded as a True Random Noise Generator, TRNG, as well.

Typically, the PRNG can be invoked with no parameters. Some PRNG require a specification of the number of random bits needed in order to generate a "random" value. Any identical subsequent calls will render different values.

To prevent a PRNG from emitting the same pseudo random stream upon every restart, most PRNG constructs support the notion of "seeding" or initialisation with a random number seed. Typically, most PRNG will render the same output stream when seeded with the exact same seed again.

Generally, a PRNG is not a PRNG when both the actual PRNG construct and the seed are known to the observer. The observer can easily predict the next (n+1) PRNG output by seeding the PRNG with the initial seed and iterating the PRNG n+1 times.

There are PRNG constructs, which can take the "n" count as a parameter and produce a pseudo random response in a single run. The Data Encryption Standard function DES_encrypt(seed|count), where "|" denotes concatenation is one example.

By exposing either the algorithm or the seed, the PRNG is weakened. Note however, that a strong PRNG construct with a large internal state can still be very hard to predict as long as the initial seed is unknown to the observer. Note also, that it can be quite hard to protect the iteration count from an outside observer. Resorting to constructs where only every n'th PRNG output is actually emitted from the PRNG can be viewed as a new PRNG, which again faces the same problem of iteration count.

PRNG construction constitutes a science per se, and a large number are readily available in the literature. To name a few: RC2, RC4, most block ciphers in OFB (Output FeedBack) mode, MT19937B, general constructs with HMAC combinations with secure hash algorithms such as SHA-1, MD5 and RIPEMD.

When a PRNG meets certain criteria regarding predictability, it can be referred to as a cryptographically secure PRNG. RC2 and RC4 were constructed for this very purpose. A large amount of research has gone into the investigation of several of these algorithms regarding their cycle length. For the case of hash constructs, one problem that has been dealt with is how many output bytes can be achieved without endangering the PRNG internal entropy pool, without entropy renewal.

A true One-Time Password, OTP, cryptographic construct is perhaps the only cryptographic construct against which no attacks are known or indeed available. OTP cryptography is based on using a table, as shown in fig. 2, of predefined keys, which are used only once and subsequently discarded by both the client and the server.

Besides encryption, One-Time Passwords, OTP's, are also commonly used in authentication, where instead of presenting a particular password upon each logon, the user enters the next entry in the table of passwords.

One drawback lies in the distribution of the predefined tables.

Another potential problem for OTP based systems is lack of synchronisation between client and server. E.g. the client tries to authenticate over a bad connection and the server receives a (garbled) bad password. The server must deny access and disregard the logon request. By now, the client's next password is from entry n+1, whereas the server still is at n. Consequently, the server must try several passwords, usually up to n+x, where x can be considered as a synchronisation window. As long as less than x wrong authentications has taken place since the last correct authentication, the current authentication can be successful if the password is correct.

The predefined lists of one-time passwords do not necessarily have to be lists. In more general notions the lists could be predetermined <value, iteration> tuples.

This brings us back to the PRNG's. If an initial seed has been agreed upon, a set of new passwords can be viewed as a result of the PRNG process or output.

Encrypting the same plaintext P twice using the same cipher and key will produce two equal cipher texts C and C'. To prevent this an Initialization Vector (IV) is often used. The initialisation vector is randomly chosen differently for each plaintext P and is sent in clear text to the receiver. For stream ciphers (e.g. RC4) the initialisation vector is often concatenated with the secret key:

$$C = \text{encrypt}(P, \text{key}|IV)$$

$$P = \text{decrypt}(C, \text{key}|IV)$$

For block ciphers (e.g. DES) it is more common to have a construct similar to:

$$P' = P \text{ xor } IV, \ C' = \text{encrypt}(P', \text{key})$$

$$P' = \text{decrypt}(C', \text{key}), \ P = P' \text{ xor } IV$$

In both cases, the initialisation vector is sent in the clear to the receiver with each encrypted message.

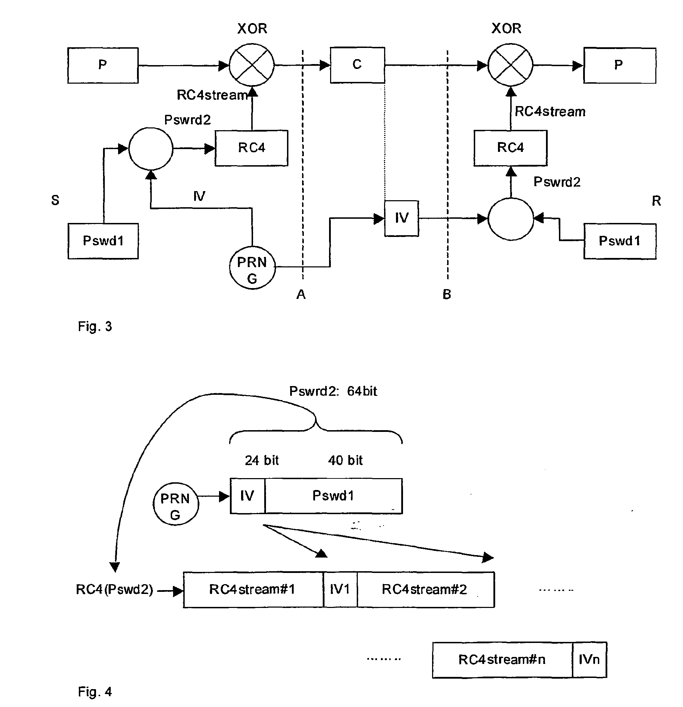

In fig. 3, 4 and 7, the inventors perception of the latter described cryptography method has been shown.

A sequence of plain text blocks P is issued by a sender S who has agreed on a 40-bit key or password, Pswd1, with a receiver R. The plaintext blocks P are processed with an exclusive-OR function with various OTP's denoted RC4stream#1, RC4stream#2.... RC4stream#n.

In analogy with figure 1, a sender side S and a receiving side R are provided and transmission by a telecommunication system (not shown) over a medium M between points A and B is provided.

Reference shall now be made to fig. 3 and 4. On the sender side S, a PRNG generates an identification vector, which generates a 24-bit response. Next, a second 64-bit password, Pswd2, is composed of the initialisation vector generated by the PRNG and the Pswd1 by arranging the two bit sequences after one another. The resulting key, Pswd2, is input in a RC4 function, which subsequently generates the one time password, namely a bit sequence denoted RC4stream#(1-n), which is input to the XOR function, mentioned above. Thereby the cipher text C is generated and is ready for being transmitted.

The cipher text C - having an order number corresponding to a given plaintext order number - and the initialisation vector of corresponding order number used for generating the RC4Stream are enclosed in the same data packet when transmitting.

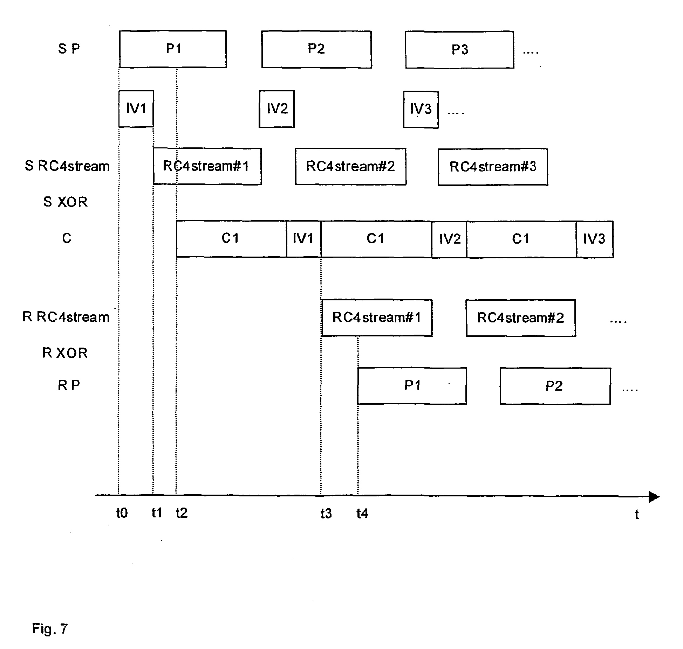

In fig. 7, the timing diagram pertaining to the above cryptography method has been shown. At the sender side, S, an initial packet P1 and an initial initialisation vector IV1 are commenced issued at time t0.

The second password Pswd2 is generated by the composition of Pswd1 and the random initialisation vector and is inserted in the RC4 function. From t1 the RC4stream (RCstream#1) is generated via the RC4 generator at the sender side S RC4. At t2 the XOR function at the sender side S XOR generates the ciphertext C1, such that a data packet consisting of ciphertext and initialisation vector, having corresponding order numbers are transmitted.

Referring now to fig. 3, substantially the same process is applied at the receiving side R as at the sending side S: The initialisation vector is recovered from the transmitted packet. The receiver outputs the Pswd1 of appropriate order number for instance corresponding to the packet number. Subsequently, an RC4stream, which is identical to the RC4stream at the sending side of the same order number, is input to the XOR operator.

Hence, as soon the transmitted initialisation vector is received, the corresponding RC4stream can be generated. In fig. 7, it is shown that the generation of the RC4stream#1 at the receiver side is commenced at t3 and is XOR'ed with the ciphertext C1. Finally, at t4 the plaintext P1 is output of the operator R XOR.

This process is iterated with plaintext blocks P2 to Pn using only one single password Pswd1 known to the sender and receiver and by using distinct one time passwords by pseudo randomly generating initialisation vectors IV1 to IVn.

Prior art document WO01/4859 shows a linear feedback shift register used for a pseudo random number generator in a stream-cipher crypto-system. The pseudo random number generator requires an initialisation vector and a private key both at the sending and the receiving side. The linear feedback shift register aims at reducing the number of instructions required for generating pseudo random sequences. WO01/50676 shows a similar system.

Prior art document US6249582 shows an apparatus and method for reducing the overhead of a blockcipher and includes shortening the length of an initialisation vector. Cipher block chaining prevents the overall cycle length of the block cipher from decreasing.

Summary of the invention

It is a primary object of the present invention to decrease the overhead information on a communication channel while attaining a high cryptographic security.

This object has been achieved by the subject matter defined in claim 1.

It is a primary object of the present invention to utilise more effectively the prevalent level of processing power available for ciphering or deciphering messages.

This object has been achieved by the subject matter defined by claim 2.

It is a further object of the present invention to increase the cryptographic security.

This object has been achieved by the subject matter defined in claim 3.

It is a further object of the present invention to further increase the cryptographic security.

This object has been achieved by the subject matter defined in claim 4.

Further advantages will appear from the following detailed description of the invention.

Brief description of the drawings

Fig. 1 shows a known for a symmetric cryptography model,

Fig. 2 shows an exemplary excerpt of a one-time password table,

Fig. 3 shows another known cryptography model,

Fig. 4 shows operations and bit formats for the known model of fig. 3,

Fig. 5 shows the applicants interpretation of a possible timing diagram relating to the model shown in fig. 3 and 4,

Fig. 6 shows a preferred cryptography model according to the invention,

Fig. 7 shows operations and bit formats for the model of fig. 6, and

Fig. 8 shows a timing diagram relating to the preferred embodiment of the invention as shown in fig. 6 and 7.

Detailed description of preferred embodiments of the invention

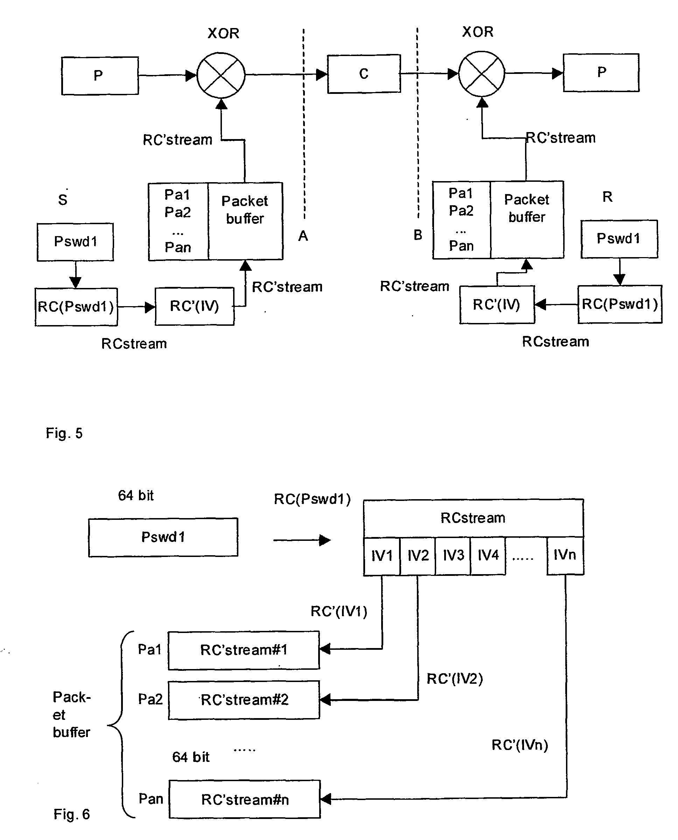

In figs. 5, 6 and 8 an exemplary embodiment of the present invention has been shown.

Initially an initial Pswd1 is negotiated between a sender and a receiver during session set-up/ authentication. It should be understood that the roles of the sender and the receiver might change over time, such that a bi-directional communication session is performed. However, in the following for reasons of simplicity it shall be explained how communication is performed from a party denoted sender to another party denoted receiver. The sender and receiver could refer to communication units, e.g. mobile terminals.

As in the prior art, a sequence of plain texts P is issued by the sender S who has agreed on a first password, Pswd1, with the receiver R. The plaintexts P are processed with an exclusive-OR function with various keys denoted RC'stream#1, RC'stream#2....

RC'stream#n. The first password may have a length of for instance 64 bit or any other length.

More specifically, the first password Pswd1 is input in a random sequence generator, RC, such as RC2 or RC4, and a first random bit sequence string, RCstream, is generated as shown in fig. 6. The RC generator could suitably be chosen such that the RCstream has an infinite length. This random bit sequence string is partitioned such that a set of n initialisation vectors, IV1 - IVn, is defined.

As shown in fig. 5 and 6, the n identification vectors IV1 - IVn are individually processed according to second random sequence generator RC' according to the function RC'(IV), such that a set of n random bit string sequences, RC'stream#1 - RC'stream#n appears. Again, as random sequence generator, RC2 or RC4 could advantageously be used, but other generators are optional.

It is envisioned that as an alternative to the embodiment shown in fig. 5 and 6, a single random bit sequence generator RC can be used whereby the resulting bit sequence being partitioned into n keys.

The latter n streams are stored in tabular form with Pa1 - Pan entries in a packet buffer. Thereby, a list of n distinct one-time keys is accomplished.

At the receiving side the same operations as on the sending side are carried out such that an identical list of one time keys are accomplished on both sides.

Hence, ciphering is accomplished for a plaintext P with a given order number using the known XOR function with a given key, RC'stream, with a corresponding order number, such that a ciphertext C of the corresponding order number is accomplished.

The deciphering is accomplished for a ciphertext C with a given order number using the known XOR function with the same key, RC'stream, with the same corresponding order number as used under ciphering.

Since in many known transmission systems, especially packet data systems, transmitted packets or frames are containing a session sequence number, the order number of the cryptography method can easily be associated with the order number used for the transmission session.

Thereby, there is no need for synchronisation during the communication session. Although packets may not be received in consecutive order, they may still be deciphered according to the predetermined list of one-time keys Pa1 - Pan.

Advantageously, the list of one-time keys RC'stream#1, RC'stream#2.... RC'stream#n in the array Pa1, Pa2, Pan are computed on both the sender side and the receiver side, whereby transmission session order numbers 1 - n are associated to the array order numbers Pa1, Pa2, Pan. A given plaintext is recovered according to the given order a given ciphertext C is received in a given communication session, by retrieving a respective computed one time key RC'stream#1, RC'stream#2.... RC'stream#n with the associated transmission session order number of the array on the receiver side.

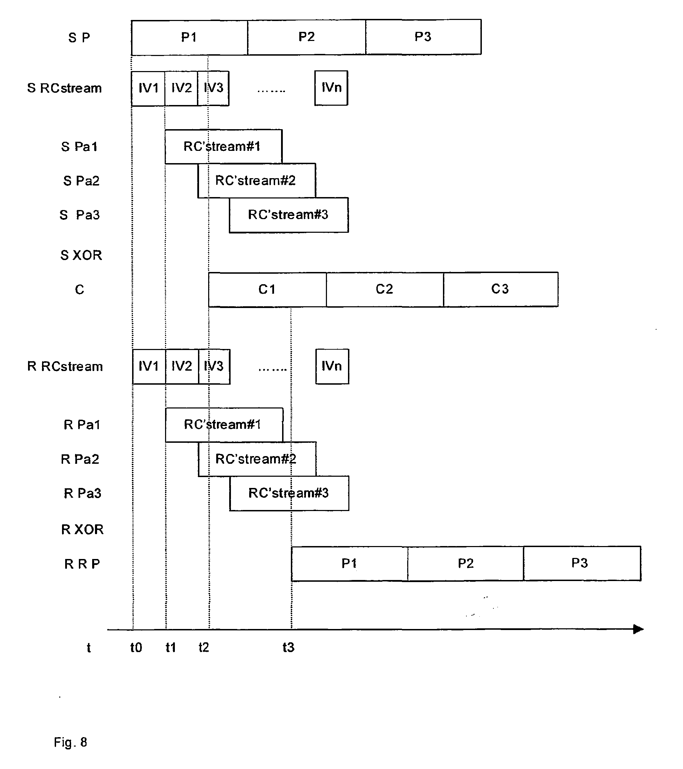

Advantageously the packet buffer list may be computed before a communication session is commenced, but the creation of the list may also be performed intermittently with the transmission of packets as shown in the timing diagram of fig. 8. As soon as the buffer has reached an appropriate size to handle incoming ciphertext, the calculation of additional one-time keys may be carried out as processor power is available.

In fig. 8, the timing diagram pertaining to the above cryptography method has been shown. At the sender side, S, an initial packet P and an initial initialisation vector are commenced issued at time t0.

Subsequently, new plaintext packets are issued and new initialisation vectors are generated according to the RC function.

As soon as the first initialisation vector is issued the computation of the list of one-time keys and the subsequent storing in the packet data buffer can be commenced. As shown in fig. 8, from time t1, respective one time keys RC'stream#1, RC'stream#2, RCstream#3 are computed and stored in the packet array at order numbers Pa1, Pa2 and Pa3.

The same applies to the receiver side, here the initialisation vector and the one-time keys are commenced computed immediately after the communication process is initiated.

Hence, a number of one time keys RC'stream#1, RC'stream#2, RCstream#3 are prevalent at the sender side and the receiver side at an early stage in the communication session. These one-time keys are ready to be used irrespective of the order the actual packets may be transmitted and hence independently of the progression of the communication session.

At t2 the ciphertext C1 is issued and subsequently at t3 the plaintext P1 is recovered. Although it would be advantageous to calculate and store one-time keys both on the sender side and the receiver side, it would, depending on the available processing power available in the communication unit at either the receiver and the sender side, be possible to compute the array on only one side.

It appears that by using an OTP (One Time Password/Dynamic password) scheme, with the initial Pswd1 negotiated during session setup/ authentication, a changing initialisation vector can be used without having to openly synchronise it over the network. Moreover, as initialisation vectors are not sent over the communication channel as overhead, the capacity of the communication channel can be devoted to content while security is retained at a high level.

The invention is both applicable to stream cipher modes and block cipher modes.

To efficiently cope with packet losses each packet can optionally be equipped with a sequence number modulo window size (as little as 4 bits give support for 15 lost packets), or an already existing sequence number (if protocol characteristics are known) can be reused to save bandwidth.

As the initialisation vectors and the one time keys can be pre-computed before packet arrival, it is also possible to pre-compute the stream cipher bit-streams. Consequently, the potentially computationally heavy random bit sequence bit-streams can be computed in low priority mode before the data has arrived. When data arrives, there is only need to XOR the data with the stored bit stream to regain the plaintext. Optionally, the sequence number can be checked for consistency, to detect possible packet loss.

The above method allows for an efficient and secure sending of encrypted packets, specifically over bandwidth limited communication links as no explicit transfer of initialisation vectors take place.

The specific exploitation of the ability to precompute initialisation vector's (keys) makes it possible to achieve high throughput on limited devices.

Normal stream cipher encryption often requires frequent changing of keys to prevent known plain text attacks. According to the invention, keys can be changed every packet thus improving security.

The random bit sequence generators, RC and RC', could be based on the HMAC-SHA-1, in output feedback mode, or any block cipher in OFB, such as DES or any other construct suitable as a PRNG could be used.

**Claims**

1. Method comprising the steps of ciphering a sequence of plaintext P issued by a sender side S who has agreed on at least one password, Pswd1, with a receiver side R,

processing the plaintext P with an encryption function (XOR) into a sequence of ciphertext C with respective one-time keys (RC'stream#1, RC'stream#2.... RC'stream#n),

transmitting the ciphertext over a medium in a transmission session using predetermined session order numbers,

receiving the ciphertext and recovering the plaintext by a decryption function (XOR) with the same respective one-time keys (RC'stream#1, RC'stream#2.... RC'stream#n),

- the agreed password (Pswd1) is input in a first pseudo random sequence generator (RC), wherein the first random bit generator (RC) is generating a large or an infinite first random bit sequence (RCstream), on which the one-time keys are based,

**characterised in that**

- independently of the progression of the communication session, computing and storing a list of one-time keys (RC'stream#1, RC'stream#2.... RC'stream#n) in an array (Pa1, Pa2, Pan) on at least the sender side or the receiver side.

2. Method according to claim 1, wherein a list of one-time keys (RC'stream#1, RC'stream#2.... RC'stream#n) in the array (Pa1, Pa2, Pan) are computed on both the sender side and the receiver side, the method furthermore comprising the following steps

- associating transmission session order numbers (1 - n) to the array order numbers (Pa1, Pa2, Pan),
- recovering a given plaintext according to the given order a given ciphertext C is received in a given communication session, by retrieving a respective computed one-time key (RC'stream#1, RC'stream#2.... RC'stream#n) with the associated transmission session order number of the array on the receiver side.

3. Method according to claim 1 or 2, wherein the first pseudo random bit sequence is processed such that n random bit sequences (RC'stream#1 - RC'stream#n) appear which are used as one-time keys.

4. Method according to claim 1 or 2, wherein from the first random bit sequence a set of n second initialisation vectors (IV1 - IVn) are defined and on the basis on the set of n second initialisation vectors (IV1 - IVn) a set of second n random bit sequences is computed by means of a second pseudo random generator (RC'), the second n random bit sequences defining the list of one-time keys (RC'stream#1, RC'stream#2 .... RC'stream#n) to be stored in the array (Pa1, Pa2, Pan).

5. Method according to any preceding claim, wherein the calculation of one-time keys is carried out as processor power is available.

6. Method according to any preceding claim, wherein initially an initial password (Pswd1) is negotiated between the sender and the receiver during session set-up and / or authentication.

7. Method according to any preceding claim, wherein transmitted packets or frames are containing the session sequence number.

**Patentansprüche**

1. Verfahren, umfassend die Schritte zum Verschlüsseln einer Sequenz von Klartext P, der von einer Senderseite S ausgegeben wird, die mit einer Empfängerseite R über ein Passwort Pswd1 übereingekommen ist,

Bearbeiten des Klartextes P mit einer Codierungsfunktion (XOR) in eine Sequenz von Chiffretext C mit entsprechenden Einmal-Schlüsseln (RC'stream#1, RC'stream#2, ..., RC'stream#n),

Übertragen des Chiffretextes über ein Medium in einer Übertragungssitzung unter Verwendung von vorbestimmten Sitzungsreihenfolgezahlen,

Empfangen des Chiffretextes und Wiederherstellen des Klartextes durch eine Decodierungsfunktion (XOR) mit den gleichen entsprechenden Einmal-Schlüsseln (RC'stream#1, RC'stream#2, ..., RC'stream#n),

- wobei das beschlossene Passwort (Pswd1) in einen ersten Pseudo-Zufallssequenzerzeuger (RC) eingegeben wird, wobei der erste Zufalls-Bit-Erzeuger (RC) eine große oder eine unbegrenzte erste Zufalls-Bitsequenz (RCstream) erzeugt, auf der die Einmal-Schlüssel basieren,

**dadurch gekennzeichnet, dass**

- unabhängig von dem Verlauf der Kommunikationssitzung eine Liste von Einmal-Schlüsseln (RC' stream#1, RC' stream#2, ..., RC'stream#n) mindestens auf der Senderseite oder der Empfängerseite berechnet und in einem Array (Pa1, Pa2, Pan) gespeichert wird.

2. Verfahren nach Anspruch 1, wobei eine Liste von Einmal-Schlüsseln (RC'stream#1, RC'stream#2, ..., RC'stream#n) in dem Array (Pa1, Pa2, Pan) sowohl auf der Senderseite als auch auf der Empfängerseite berechnet werden, wobei das Verfahren ferner die folgenden Schritte umfasst:

- Verknüpfen von Übertragungssitzungs-Reihenfolgezahlen (1-n) mit den Arrayreihenfolgezahlen (Pa1, Pa2, Pan),
- Wiederherstellen eines gegebenen Klartextes gemäß der gegebenen Reihenfolge, ein gegebener Chiffretexte C wird empfangen in einer gegebenen Kommunikationssitzung, durch Abfragen eines entsprechend berechneten Einmal-Schlüssels (RC'stream#1, RC'stream#2, ..., RC'stream#n) mit der zugewiesenen Übertragungssitzungsnummer des Arrays auf der Empfängerseite.

**3.** Verfahren Nach Anspruch 1 oder 2, wobei die erste Pseudo-Zufallsbitsequenz so bearbeitet wird, dass n Zufallsbitsequenzen (RC'stream#1 - RC'stream#n) erscheinen, die als Einmal-Schlüssel verwendet werden.

**4.** Verfahren nach Anspruch 1 oder 2, wobei von der ersten Zufallsbitsequenz ein Satz von n zweiten Initialisierungsvektoren (IV1 - IVn) definiert wird, und basierend auf dem Satz der n zweiten Initialisierungsvektoren (IV1 - IVn) wird ein Satz von zweiten n Zufallsbitsequenzen durch einen zweiten Pseudo-Zufallserzeuger (RC') berechnet, wobei die zweiten n Zufallsbitsequenzen die Liste der Einmal-Schlüssel (RC'stream#1, RC'stream#2, ..., RC'stream#n) definieren, die in dem Array (Pa1, Pa2, Pan) zu speichern sind.

**5.** Verfahren nach einem der vorangehenden Ansprüche, wobei die Berechnung der Einmal-Schlüssel ausgeführt wird, wenn Prozessorleistung verfügbar ist.

**6.** Verfahren nach einem der vorangehenden Ansprüche, wobei anfangs ein Anfangspasswort (Pswd1) zwischen dem Sender und dem Empfänger während des Sitzungsaufbaus und/oder der Authentifizierung verhandelt wird.

**7.** Verfahren nach einem der vorangehenden Ansprüche, wobei übertragene Pakete oder Rahmen in der Sitzungssequenznummer enthalten sind.

**Revendications**

**1.** Procédé comprenant les étapes de chiffrage d'une séquence de texte en clair P publiée par un côté S d'émetteur qui a convenu d'au moins un mot de passe, Pswd1, avec un côté R de récepteur ; de traitement du texte en clair P avec une fonction de cryptage (XOR) dans une séquence de texte chiffré C avec des clés de session respectives (RC'stream#1, RC'stream#2, ..., RC'stream#n) ; de transmission du texte chiffré sur un support dans une session de transmission en utilisant des numéros de commande de session prédéterminés, de réception du texte chiffré et de récupération du texte en clair par une fonction de décryptage (XOR) avec les mêmes clés de session respectives (RC'stream#1, RC'stream#2, ..., RC'stream#n) ;

- le mot de passe convenu (Pswd1) est admis en entrée dans un premier générateur (RC) de séquences pseudo-aléatoires, dans lequel le premier générateur (RC) de bits aléatoires produit une grande ou une première séquence de bits aléatoires infinie (RCstream), sur laquelle les clés de session sont basées ;

**caractérisé en ce que**

- indépendamment de la progression de la session de communication, on calcule et stocke une liste de clés de session (RC'stream#1, RC'stream#2, ..., RC'stream#n) dans une rangée (Pa1 Pa2, Pan) sur au moins le côté de l'émetteur ou le côté du récepteur.

**2.** Procédé selon la revendication 1, dans lequel une liste de clés de session (RC'stream#1, RC'stream#2, ..., RC'stream#n) dans la rangée (Pa1, Pa2, Pan) sont calculées à la fois sur le côté de l'émetteur et le côté du récepteur, le procédé comprenant de plus les étapes suivantes:

- l'association de numéros de commande de session de transmission (1- n) aux numéros de commande de rangée (Pa1, Pa2, Pan) ;
- la récupération d'un texte en clair donné selon la commande donnée, un texte chiffré C donné est reçu dans une session de communication donnée, en récupérant une clé de session calculée respective (RC'stream#1, RC'stream#2, ..., RC'stream#n) avec le numéro de commande de session de transmission associé de la rangée sur le côté de récepteur.

**3.** Procédé selon la revendication 1 ou 2, dans lequel la première séquence de bits pseudo-aléatoires est traitée de sorte que n séquences de bits aléatoires (RC'stream#1 à RC'stream#n) apparaissent et qui sont utilisées en tant que clés de session.

**4.** Procédé selon la revendication 1 ou 2, dans lequel, à partir de la première séquence de bits aléatoires, un ensemble de n deuxièmes vecteurs d'initialisation (IV1 à IVn) sont définis et sur la base de l'ensemble de n deuxièmes vecteurs d'initialisation (IV1 à IVn) un ensemble de deuxièmes n séquences de bits aléatoires est calculé à l'aide d'un deuxième générateur pseudo-aléatoire (RC'), les deuxièmes n séquences de bits aléatoires définissant la liste de clés de session (RC'stream#1, RC'stream#2, ..., RC'stream#n) à stocker dans la rangée (Pa1, Pa2, Pan).

5. Procédé selon l'une quelconque des revendications précédentes, dans lequel le calcul de clés de session est réalisé à mesure que la puissance de processeur est disponible.

6. Procédé selon l'une quelconque des revendications précédentes, dans lequel, au départ, un mot de passe (Pswd1) initial est négocié entre l'émetteur et le récepteur pendant une configuration et/ou une authentification de session.

7. Procédé selon l'une quelconque des revendications précédentes, dans lequel des paquets ou des trames transmis contiennent le numéro de séquence de session.

XOR                    XOR

P → ⊗ → C → ⊗ → P

Key                    Key

S                                      R

| Ord# | Key |

| Ord# | key |

A          B

Fig. 1

Fig. 2

| Order# | Key |
|--------|-----|
| 1 | 089 |
| 2 | 170 |
| 3 | 075 |
| 4 | 118 |
| 5 | 143 |
| 6 | 085 |
| 7 | 136 |
| 8 | 065 |
| 9 | 146 |
| 10 | 033 |
| 11 | 183 |
| 12 | 072 |
| 13 | 146 |

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 014859 A
- WO 0150676 A

- US 6249582 B